# EUROPEAN PATENT SPECIFICATION

(11) **EP 0 687 449 B1**
(45) Date of publication and mention of the grant of the patent: **15.03.2000**
(21) Application number: 94109413.8
(22) Date of filing: 17.06.1994
(51) Int. Cl.: A61C 8/00, A61C 9/00, A61C 13/00

(54) **Dental implant replica**
Kopie eines Zahnimplantats
Copie d'un implant dentaire

(43) Date of publication of application: 20.12.1995
(73) Proprietor: SOADCO S.L., Escaldes - Engordany (AD)
(72) Inventor: Padros Fradera, Alejadro, ES-08006 Barcelona (ES)
(74) Representative: SUGRANES - VERDONCES - FERREGÜELA

(56) References cited:
- EP-A- 0 256 708
- WO-A-93/20774
- DE-A- 3 539 764
- DE-B- 2 521 573
- US-A- 4 955 811

## Description

The present invention relates to a dental implant replica, of the type which can be fixed to a dental model and which comprise a copy of a pre-prosthetic collar of the dental implant or a copy of the implant itself, for fitting dental prostheses.

More particularly, the present invention relates to a dental implant replica consisting of a fixed part, designed to remain an integral part of the scagliola model, and a removably-mountable part adapted to be inserted tightly into the fixed part.

### BACKGROUND OF THE INVENTION

Known dental prostheses are obtained using a wax model or mould which is formed on a copy, generally made of scagliola, of the patient's teeth.

When a prosthesis is made on a dental implant, said wax mould is usually made on a calcinable collar, preferably made of a plastic material, which fits onto the exact copy of the pre-prosthetic collar of the dental implant or onto the exact copy of the dental implant itself, such that once the dental prosthesis has been made in metal from the wax mould, it can be fitted to the dental implant.

It is common practice for said replica or exact copy of the pre-prosthetic collar and/or of the dental implant to be immovably fixed to the scagliola model of the patient's teeth, such that the wax mould of the dental prosthesis is made directly on the dental model itself in order to prevent any angular or linear movement during the formation of the wax mould which could affect the subsequent fitting of the prosthesis onto the dental implant arranged in the maxilla of the patient.

The main drawback of this technique for making the wax mould of a dental prosthesis is the fact that whilst the wax mould is being made it cannot be removed from the dental model to which the exact copy of the preprosthetic collar and/or of the implant is fixed, and as a result the operator making the wax mould has to work in difficult conditions leading to long execution times and therefore a corresponding increase in cost.

Dental implant replicas are known which consist of a fixed part, designed to remain an integral part of the scagliola model, and a removably-mountable part adapted to be inserted tightly into the fixed part, for instance that described in EP-A-0256708, in which the fixed part is in the form of a hollow cylindrical sleeve, provided with an axial through hole, and the removably-mountable part having a cylindrical shape whose external section comprises an enlargement joined to a prismatic coaxial extension, which is a copy of the pre-prosthetic collar or of the head of the implant, whereas the central section of the replica is cylindrical and has an outer diameter which corresponds exactly to the inner diameter of the axial hole of the fixed part.

### DESCRIPTION OF THE INVENTION

In order to provide a solution to the problems described above, which relate to the fixing of the copy of the pre-prosthetic collar of the dental implant to the dental model made of scagliola of the patient's teeth, a dental implant replica is disclosed which has a new structure and type of operation and which enables the wax mould of the dental prosthesis to be removed from the dental model made of scagliola and refitted as many times as necessary for its formation, without the need to use any tools.

In this way, the operator can work in total comfort and the time required to make the wax mould of the dental prosthesis is considerably reduced.

The dental implant replica according to the present invention is characterized essentially in that said removably-mountable part has an inner section, provided with a positioning means constituted by a wedge-shape extension, adapted to enter the scagliola of the dental model while the latter is still in a plastic state, defining in said scagliola a hole, such that once the dental model has dried, the extension is removably fitted in the hole, positioning the fixed part relative to the removably-mountable part for the thorough coupling of the latter in the former.

According to another feature of the invention, the prismatic coaxial extension, which is the copy of the pre-prosthetic collar or the head of the dental implant, is provided with a threaded coaxial hole which extends in depth beyond the coaxial enlargement and which is adapted for receiving a bolt for fixing the wax model of the dental prosthesis to the removably-mountable part, whereby the removably-mountable part, and therefore the model, as stated above, can be fitted into and removed from the fixed part as many times as necessary whilst the wax mould is formed.

According to a further feature of the invention, the outer diameter of the coaxial enlargement corresponds exactly to the outer diameter of the fixed part such that the central section and inner section can slide tightly through the fixed part, said sliding movement being limited by the action of the coaxial enlargement which acts as a stop against the front edge of the fixed part.

### BRIEF DESCRIPTION OF THE DRAWINGS

The accompanying drawings show by way of non-limi ting example one embodiment of the invention.
Figure 1 is a perspective view of the removably-mountable part of the dental implant replica which forms the object of the present invention;
Figure 2 shows a perspective view of the fixed part of the replica in question;
Figure 3 is a partially sectioned view of the fixed and removably-mountable parts of the replica joined together; and
Figures 4, 5 and 6 are each partially sectioned views of the replica showing the operation of the replica fitted to a dental model.

### DESCRIPTION OF A PREFERRED EMBODIMENT

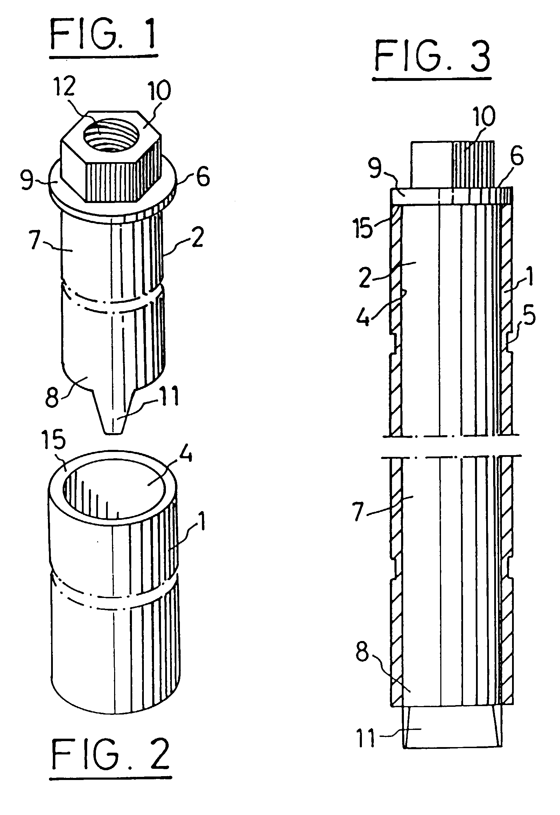

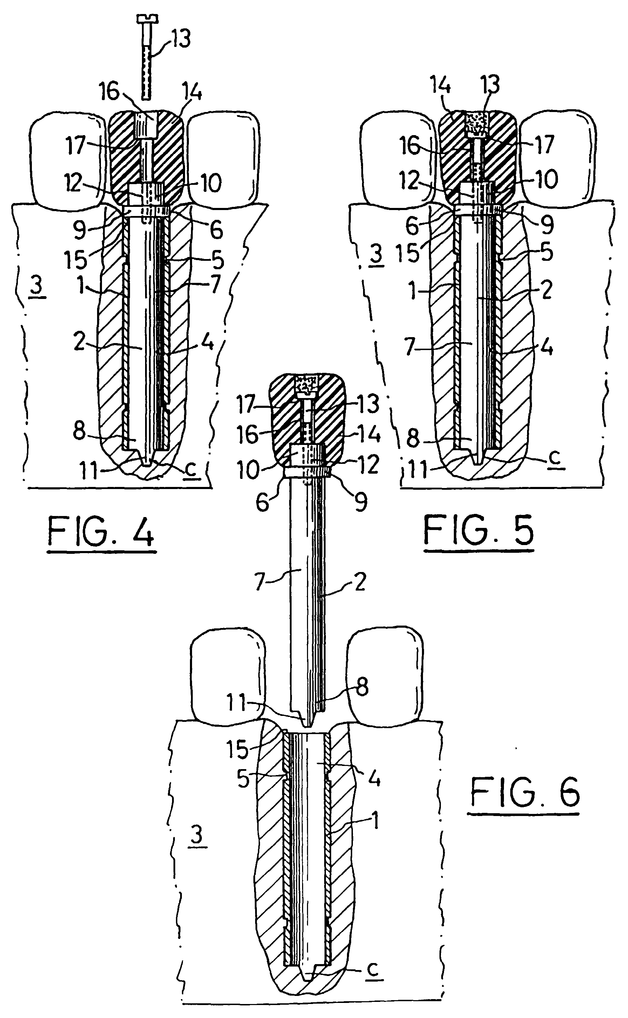

It can be seen in the drawings that in the preferred embodiment of the dental implant replica which forms the object of the present invention and which is shown in figures 1 to 6, the replica comprises a fixed part 1, shown in figure 2, and a removably-mountable part 2, shown in figure 1, it being possible to fit the fixed part 1 and the removably-mountable part 2 together (figure 3) and to a dental model 3 made of scagliola which is a reproduction of the patient's teeth (figures 4, 5 and 6).

The fixed part 1 has the general shape of a hollow cylinder, in the form of a sleeve, and is provided with an axial through hole 4 whose size is such that the removably-mountable part 2 fits tightly inside it.

Externally, the fixed part 1 is provided with two peripheral grooves 5 designed to fix the position of the fixed part 1 in the dental model 3. When the fixed part 1 is introduced into the dental model 3, the scagliola of which it is made occupies the peripheral grooves 5 such that once the dental model 3 has dried the fixed part cannot, under normal conditions of use, be extrac ted from the bulk of the dental model 3, thereby ensuring that it is correctly positioned.

The removably-mountable part 2 has the general shape of a cylinder in which it is possible to distinguish a external section 6, a central section 7 and an inner section 8.

The outer section 6 comprises a coaxial enlargement 9 joined to a prismatic coaxial extension 10 which is a copy of the pre-prosthetic collar of a dental implant, not shown in the drawings. The central section 7 is cylindrical and has an outer diameter which corresponds exactly to the inner diameter of the axial hole 4 of the fixed part 1. The inner section 8 is provided with a central positioning extension 11 whose length is appreciably equal to the diameter of the central section 7 and which has a trapezial cross section, said extension 11 adopting a shape such as that of the tip of a screw-driver.

The prismatic coaxial extension 10 is provided with a threaded hole 12 which extends in depth beyond the coaxial enlargement 9 and which is adapted for receiving a bolt 13 for fixing the wax model 14 of the dental prosthesis to the removably-mountable part 2.

The outer diameter of the coaxial enlargement 9 corresponds exactly to the outer diameter of the fixed part 1, such that the central section 7 and inner section 8 can slide tightly through the fixed part 1, said sliding movement being limited by the action of the coaxial enlargement 9 which acts as a stop against the front edge of the fixed part 1.

Whilst the dental model 3 made of scagliola is in a plastic state, the fitting of the removably-mountable part 2 into the fixed part 1, until the coaxial enlargement 9 acts as a stop against the external edge 15, causes the positioning extension 11 of the removably-mountable part to enter the bulk of the dental model 3, defining in said bulk a hole c which corresponds in size and shape to said extension 11, such that once the dental model 3 has dried, when the removably-mountable part 2 is fully inserted into the fixed part 1 both parts 1 and 2 maintain the same position relative to each other.

The prismatic coaxial extension 10, which constitutes the head of the implant itself, is incorporated into the wax mould 14 initially modelled on calcinable plastic, the hole 16 and the intermediate step 17 being defined in said wax mould 14.

The bolt 13 is placed inside the hole 16 and screwed into the hole 12 of the prismatic coaxial extension 10, firmly securing the wax mould 14 to the removably-mountable part 2 of the dental implant replica which forms the object of the present invention.

In this way, the removably-mountable part 2, and therefore the wax mould 14, can be fitted into and removed from the fixed part 1 as many times as necessary whilst the wax mould is formed.

## Claims

1. A dental implant replica, of the type designed to be fixed to models (3) made of scagliola and provided with an exact imitation of a pre-prosthetic head or collar (10) or of a head of the implant itself, adapted to carry the corresponding wax prosthesis (14) modelled on calcinable plastic, the replica consisting of a fixed part (1), designed to remain an integral part of the scagliola model (3), and a removably-mountable part (2) adapted to be inserted tightly into the fixed part (1), the fixed part (1) of the replica being in the form of a hollow cylindrical sleeve, provided with an axial through hole (4), the removably-mountable part (2) having a cylindrical shape whose external section (6) comprises an enlargement (9) joined to a prismatic coaxial extension (10), which is a copy of the pre-prosthetic collar or of the head of the implant, whereas the central section (7) of the replica is cylindrical and has an outer diameter which corresponds exactly to the inner diameter of the axial hole (4) of the fixed part (1), characterized in that said removably mountable part (2) has an inner section (8), provided with a positioning means constituted by a wedge-shape extension (11), adapted to enter the scagliola of the dental model (3) while the latter is still in a plastic state, defining in said scagliola a hole c, such that once the dental model (3) has dried, the extension (11) is removably fitted in the hole c, positioning the fixed part (1) relative to the removably mountable part (2) for the thorough coupling of the latter in the former.

2. A dental implant replica according claim 1, characterized in that the prismatic coaxial extension (10), which is the copy of the pre-prosthetic collar or the head of the dental implant, is provided with a threaded coaxial hole (12) which extends in depth beyond the coaxial enlargement (9) and which is adapted for receiving a bolt (13) for fixing the wax model (14) of the dental prosthesis to the removably-mountable part (2), whereby the removablymountable part (2), and therefore the model (14), can be fitted into and removed from the fixed part (1) as many times as necessary whilst the wax mould is formed.

3. A dental implant replica according to the preceding claims, characterized in that the outer diameter of the coaxial enlargement (9) corresponds exactly to the outer diameter of the fixed part (1) such that the central section (7) and inner section (8) can slide tightly through the fixed part (1), said sliding movement being limited by the action of the coaxial enlargement (9) which acts as a stop against the front edge (15) of the fixed part (1).

## Patentansprüche

1. Dentalimplantat-Replika von der zur Befestigung an Gipsmodellen vorgesehenen Art und versehen mit einer exakten Nachbildung eines präprothetischen Kopfes oder Kragens (10) oder eines Kopfes des Implantats selbst, zum Tragen der entsprechenden, auf kalzinierbarem Kunststoff modellierten Wachsprothese (14), wobei die Replika sich zusammensetzt aus einen zum Verbleib als eingebautes Teil des Gipsmodelles (3) vorgesehenen befestigten Teil (1) und einem zum festen Einsetzen in das befestigte Teil (1) angepassten, lösbar montierbaren Teil (2), wobei das befestigte Teil (1) der Replika in der Form einer hohlzylindrischen, mit einer axialen Durchgangsbohrung (4) versehenen Hülse vorliegt, wobei das lösbar montierbare Teil (2) eine zylindrische Form aufweist, dessen äusserer Teil (6) eine mit einer prismatischen koaxialen Verlängerung (10) verbundene Erweiterung (9) aufweist, welche eine Kopie des prä-prothetischen Kragens oder des Kopfes des Implantats ist, während der zentrale Teil (7) der Replika zylindrisch ist und einen äusseren Durchmesser aufweist, der exakt dem inneren Durchmesser der axialen Bohrung (4) des befestigten Teiles (1) entspricht, dadurch gekennzeichnet, dass jenes lösbar montierbare Teil (2) einen inneren Teil (8) aufweist, der mit einem aus einer keilartigen Verlängerung (11) gebildeten Positionierungsmittel ausgestattet ist, welches angepasst ist, um in den Gips des Dentalmodells (3) einzudringen, während das letztere noch in einem plastischen Zustand ist, wobei in jenem Gips ein Loch c derart festgelegt wird, dass, nachdem das Dentalmodell (3) getrocknet ist, die Verlängerung (11) im Loch c lösbar befestigt ist und das befestigte Teil (1) relativ zum lösbare montierbaren Teil (2) für die durchgehende Kupplung des letzteren in das erstere positioniert.

2. Dentalimplantat-Replika nach Anspruch 1, dadurch gekennzeichnet, dass die prismatische koaxiale Verlängerung (10), welche die Kopie des prä-prothetischen Kragens oder des Kopfes des Dentalimplantats ist, mit einem koaxialen Gewindeloch (12) ausgestattet ist, welches sich in der Tiefe über die koaxiale Erweiterung (9) hinaus erstreckt und das zur Aufnahme eines Bolzens (13) zum Befestigen des Wachsmodells (14) der Dentalprothese am lösbar montierbaren Teil (2) angepasst ist, wobei das lösbar montierbare Teil (2) und demzufolge das Modell (14) so oft als erforderlich im befestigten Teil (1) befestigt und von diesem gelöst werden kann.

3. Dentalimplantat-Replika nach den vorangehenden Ansprüchen, dadurch gekennzeichnet, dass der äussere Durchmesser der koaxialen Erweiterung (9) exakt dem äusseren Durchmesser des befestigten Teil (1) entspricht, so dass der zentrale Teil (7) und der innere Teil (8) eng durch das befestigte Teil (1) gleiten können, wobei jene Gleitbewegung durch die Wirkung der koaxialen Erweiterung (9) begrenzt ist, welche als Anschlag gegen die Vorderkante (15) des befestigten Teils (1) dient.

## Revendications

1. Copie d'un implant dentaire du type prévu pour être fixé à des modèles (3) constitués de plâtre dur et pourvus d'une imitation exacte d'une tête ou collerette (10) de préprothèse ou d'une tête de l'implant lui-même, apte à porter la prothèse correspondante (14) de cire modelée sur une matière plastique calcinable, la copie consistant en une partie fixe (1), prévue pour rester partie intégrante du modèle (3) en plâtre dur, et une partie insérable et démontable (2) apte à être insérée de façon ajustée dans la partie fixe (1), la partie fixe (1) de la copie étant en forme de manchon cylindrique creux à orifice axial traversant (4), la partie insérable et démontable (2) étant d'une configuration cylindrique dont la section externe (6) comprend un élargissement (9) assemblé à une extension coaxiale prismatique (10) qui est une copie de la collerette de préprothèse ou de la tête de l'implant, tandis que la section centrale (7) de la copie est cylindrique et d'un diamètre extérieur qui correspond exactement au diamètre intérieur de l'orifice axial (4) de la partie fixe (1), caractérisée en ce que ladite partie insérable et démontable (2) comporte une section intérieure (8) pourvue d'un moyen de positionnement constitué par une extension (11) à configuration de coin, apte à entrer dans le plâtre dur du modèle dentaire (3) tandis que ce dernier est encore à l'état plastique, en définissant dans ledit plâtre dur un orifice c tel que l'extension (11) est ajustée de façon amovible dans l'orifice c lorsque le modèle dentaire (3) a séché, en positionnant la partie fixe (1) par rapport à la partie insérable et démontable (2) pour un accouplement complet de cette dernière dans la première.

2. Copie d'implant dentaire selon la revendication 1, caractérisée en ce que l'extension coaxiale prismatique (10), qui est la copie de la collerette de préprothèse ou de la tête de l'implant dentaire, comporte un orifice axial fileté (12) qui s'étend en profondeur au-delà de l'élargissement coaxial (9) et qui est apte à recevoir un boulon (13) pour fixer le modèle (14) de cire de la prothèse dentaire à la partie insérable et démontable (2), de sorte que la partie insérable et démontable (2), et donc le modèle (14), peuvent être insérés dans la partie fixe (1) ou en être enlevés aussi souvent que nécessaire tandis que le moule de cire est formé.

3. Copie d'implant dentaire selon la revendication 1 ou 2 caractérisée en ce que le diamètre extérieur de l'élargissement coaxial (9) correspond exactement au diamètre extérieur de la partie fixe (1) de sorte que la section centrale (7) et la section interne (8) peuvent coulisser de façon ajustée à travers la partie fixe (1), ledit déplacement de coulissement étant limité à l'effet de l'élargissement coaxial (9) qui intervient comme butée contre le bord frontal (15) de la partie fixe (1).
